# EUROPEAN PATENT SPECIFICATION

(11) **EP 3 446 923 B1**
(45) Date of publication and mention of the grant of the patent: **14.08.2019**
(21) Application number: 17187256.7
(22) Date of filing: 22.08.2017
(51) Int. Cl.: B60R 9/06, B60R 9/10

(54) **BIKE CARRIER**
FAHRRADTRÄGER
SUPPORT DE VÉLO

(43) Date of publication of application: 27.02.2019
(73) Proprietor: Thule NV, 8930 Menen (BE)
(72) Inventor: ZWANENBURG, Guido, 9031 Drongen (BE)
(74) Representative: Wallentin, Lars

(56) References cited:
- EP-A2- 1 095 818
- DE-A1- 10 231 963
- DE-A1-102006 036 983
- DE-U1- 20 218 232
- JP-U- H0 226 959

## Description

### FIELD OF THE INVENTION

The invention relates to bike carriers of the type mounted in the loading area or trunk of a vehicle.

### BACKGROUND

Bike carriers for vehicles are widely known in the art. For recreational vehicles and vans, bike carriers which are mountable to the rear of the vehicle have become increasingly popular. Such bike carriers have the advantage that the bikes can be stored outside the vehicle so that the interior stowage space can be used for other items to be transported. However, such bike carriers have the drawback that the bikes which are transported thereon are exposed to environmental influences like rain or dust during their transport. Furthermore, such bike carriers extend the overall length of the vehicle.

In order to address the foregoing, bike carriers which are designed to be mounted in the interior of vehicles, more precisely on a loading area or in a trunk of a vehicle, have been developed. For example, bike carriers are known which can be mounted on the loading area of a pickup truck or in a trunk of a recreational vehicle. In order to allow an easy mounting of the bikes to be transported on the carrier, it is known to provide such carriers with a slide-out mechanism which allows a user to slide out the part of such a carrier, on which the bikes are to be fixed, out of the trunk or loading area. Known mechanisms are, however, often not user friendly and difficult to operate. Furthermore, known mechanism are often bulky and occupy a lot of space in the loading area or trunk.

Patent document EP 1 095 818 A2 discloses a bike carrier comprising: a base portion mountable on a vehicle; a supporting portion adapted to support at least one bike, wherein said supporting portion is translatory movably arranged on said base portion so as to be movable at least between an extended position in which the supporting portion is offset with respect to said base portion and a retracted position; and a locking mechanism adapted to releasably lock said supporting portion in said retracted position; wherein said locking mechanism comprises an operating member arranged on the supporting portion and is configured such that a locking in said retracted position can be released by said operating member.

### SUMMARY OF THE INVENTION

In view of the above background, it is the object to provide a bike carrier which addresses the foregoing problems. In particular, it is an object to provide a bike carrier with enhanced user friendliness.

The object is solved by a bike carrier according to claim 1. Advantageous further formations are subject of the dependent claims wherein specific further modifications can be gleaned from the following summary.

According to the invention a bike carrier is provided which comprises a base portion, a supporting portion and a locking portion. The base portion is mountable on a vehicle, e.g. on the floor of a loading area such as a garage or trunk in a recreational vehicle or truck bed of a pickup truck. The supporting portion may be a supporting rail. Such a supporting portion or supporting rail can be an extruded aluminium profile. Furthermore, the supporting portion is adapted to support at least one bike and is translatory movably arranged on the base portion so as to be movable between an extended position in which the supporting portion is offset with respect to the base portion and a retracted position. The retracted position may be a position of the supporting portion in which there is substantially no offset between the supporting portion and the base portion.

Preferably, both the supporting portion and the base portion are elongate members having a length which can substantially correspond to the length of the overall bike carrier. In other words, the dimension of the bike carrier in the longitudinal direction of the supporting portion and the base portion is substantially the length of the longer one of the supporting portion and the base portion. Preferably, the supporting portion and the base portion have substantially the same length.

The locking mechanism is adapted to releasably lock the supporting portion in the extended position and the retracted position. The locking mechanism comprises at least one operating member arranged on the supporting portion, preferably an operating handle or operating button, and is configured such that a locking in the extended position and the retracted position can be released by each single one of the at least one operating member.

With the latter arrangement, it is possible to unlock the supporting portion so that it is movable with respect to the base portion. Since both the locking of the extended position and the retracted position can be released by operating a single operating member, in other words one and the same operating member of the one or more operating members, the ease of use of the bike carrier is significantly increased.

Preferably, the locking mechanism comprises two operating members arranged on opposite longitudinal sides of the supporting portion. In this way, it is possible to unlock the locking mechanism from both sides. Such a configuration is especially beneficial if the bike carrier is mounted in a loading area of a recreational vehicle, which is accessible from both lateral sides of the vehicle. The bike carrier can be configured to comprise two extended positions so that it is possible to slide out the supporting portion on both sides of the vehicle. Such an arrangement allows for a more flexible loading and unloading of bikes.

According to a preferable embodiment, the locking mechanism comprises at least one engaging member. Preferably the locking mechanism comprises two engaging members. The engaging member or engaging members are configured to establish a form fit connection with the base portion. Preferably, the engaging member is a lock pin.

Consequently, the locking mechanism can comprise one or more engaging members for establishing a form fit connection with the base portion. Using one or more engaging members has the benefit that a reliable and easy to implement connection of the supporting portion with the base portion is possible. An engagement between the supporting portion and the base portion can be established by means of an engaging member which is configured to engage with a recess provided in or on the base portion or which is configured to engage with a protrusion which is provided in or on the base portion. As already mentioned above, such an engaging member may be a lock pin. In case a lock pin is used, this lock pin can be arranged so as to be movable in the direction of its longitudinal axis at least between an unlocking position and a locking position. The lock pin can be substantially cylindrical member with a rounded tip on the engagement side of the same in order to facilitate the engagement with a recess.

On the other hand, according to a further embodiment, is also possible to provide a locking mechanism with an engaging member or multiple engaging members that are able to establish a friction fit connection with the base portion. Such a friction fit connection with the base portion can be realised by using a clamping member which is able to establish a friction fit connection with the receiving member which is provided on the base portion. The receiving member may be a rail like member which extends along the longitudinal direction of the base portion and which is at least partially enclosed by the clamping member. In case the clamping member is operated, clamping members of the same are pressed on the rail like memberfrom opposite sides in order to establish the friction fit connection.

According to a further preferable embodiment, the locking mechanism comprises a force transmitting member for force transmittingly coupling the at least one operating member with each engaging member. In principle, the force transmitting member can be any suitable member which allows for a transfer of an operating force from the operating member to the engaging member or engaging members. Such a force transmitting member can be a member which is adapted to transmit a pulling force or can be a member which is adapted to transmit a pulling force and a pushing force. By coupling the at least one operating member with each engaging member, an operation of the one or more engaging members is possible independent from whether the supporting portion is in the extended or in the retracted position. With the latter arrangement, a simple a reliable actuation of the engaging members is possible.

Preferably, the force transmitting member is a lock bar which can be slidably arranged on the supporting portion and/or can be directly coupled to the at least one operating member. For example, the lock bar can be an elongate member which is substantially rigid and therefore able to transfer push and pulling forces. The lock bar preferably extends along a substantial portion of the supporting portion of the bike carrier. More precisely, the lock bar can have a length which allows a connection between the operating member and the one or more engaging members.

Preferably, the lock bar is directly coupled to the at least one operating member. In the context of the present application, directly coupled shall mean that no further force transmitting member is located in a force transmitting path of the force transmitting member besides coupling members which are used to establish a connection between the force transmitting member and the operating member. On the other hand, the lock bar may also be directly coupled to the one or more engaging members. The lock bar can be specifically designed or can comprise a further element which is either provided on the lock bar or integrally formed therewith and which is suitable for transmitting a force in a desired direction onto the one or more engaging members.

According to a further preferable embodiment, the force transmitting member comprises a coupling section for force transmittingly coupling the force transmitting member such that the engaging member is moved into an unlocking position with respect to the base portion upon movement of the force transmitting member and/or the coupling section. The unlocking position is a position in which the engaging member does not engage with a respective counterpart. A coupling section may be realised by means of a separate member which is fixed to the force transmitting member or by means of a portion which is integrally formed with the force transmitting member. The movement direction of the engaging member which is induced by a movement of the force transmitting member or the coupling section thereof preferably differs from the movement direction of the force transmitting member and/or the coupling section thereof. A coupling section may be provided for each engaging member. According to a further preferable embodiment, at least the coupling section comprises an inclined sliding surface which is in contact with the engaging member such that a movement of the force transmitting member leads to a movement of the engaging member, preferably to a movement substantially perpendicular to a longitudinal direction of the base portion. Accordingly, a simple and reliable mechanism for moving the engaging member is provided. According to another preferable embodiment, the locking mechanism comprises a stop member for defining a locking position of the supporting portion with respect to the base portion wherein the stop member preferably comprises a receiving portion for receiving the engaging member and being most preferably arranged on the base portion adjustably movable with respect to the base portion such that a stop position of the supporting portion with respect to the base portion can be changed.

According to a further preferable embodiment, the at least one engaging member is pretensioned towards a locking position by means of an elastic member such as a spring, and is configured to automatically establish the form fit connection with the base portion. By configuring the engaging member such that it is able to automatically establish a form fit connection with the base portion, a user does not need to actively establish the form fit connection. Thus, the ease of use of the bike carrier is further enhanced.

According to a first further example a bike carrier is provided which comprises a base portion mountable on a vehicle, for example on the floor of a loading area such as a garage or trunk in a recreational vehicle or a truck bed of a pickup truck, a supporting portion which is preferably a supporting rail, wherein the supporting portion is adapted to support at least one bike and is translatory movably arranged in a first direction on the base portion so as to be movable at least between an extended position in which the supporting portion is offset with respect to the base portion and a retracted position, wherein the base portion is adapted to be coupled to the vehicle such that it is arranged movable on the vehicle in a second direction which may be substantially perpendicular to the first direction and/or is completely removable from the vehicle.

Accordingly, a bike carrier is provided in which the supporting portion for supporting at least one bike is arranged movable in a first direction and the base portion of the bike carrier is configured so as to allow a movement of the base portion and, consequently, also of the supporting portion which is arranged on the base portion in a direction which differs from the first direction. Such an arrangement renders the bike carrier according to the latter example

highly flexible since it allows to position the bike carrier in the second direction and/or to completely remove the bike carrier. For example, when the bike carrier is not used to transport bikes, the bike carrier can be shifted to a side of the loading area so that it occupies less space compared to the state where the bike carrier is in the use position and thus positioned for mounting a bike thereon. In practice, the bike carrier can be arranged on the vehicle such that the first direction is substantially perpendicular to a tailgate or a door to the loading area of the vehicle or, in other words, substantially perpendicular to a plane of an opening of the loading area.

According to a preferable embodiment, the base portion comprises at least one coupling portion which is engageable and releasably lockable with a guide rail mounted on the vehicle, wherein the guide rail preferably extends in the longitudinal direction of the vehicle and/or wherein the bike carrier preferably comprises a locking mechanism as described in connection with the above first aspect.

According to a second further example a wheel holder for a bike carrier, in particular for a bike carrier as described above with respect to the invention and the first further example, , is disclosed. The wheel holder comprises a mounting portion which is adapted to mount the wheel holder releasably lockable and slidably movable in a groove formed on a lateral side of a bike carrier, in particular on a lateral side of the supporting portion of a bike carrier as described above in connection with the invention and the first further example. The mounting portion comprises a locking mechanism for releasably locking the wheel holder on the bike carrier. The wheel holder further comprises a supporting portion having a supporting surface adapted to support a wheel of a bike and further comprises a rotatable operating portion for tool-free operating the locking mechanism, wherein the operating portion is freely rotatable with respect to the supporting portion. Preferably, the outer part of the rotatable operating portion comprises a knob portion that is configured for hand operation, particularly by rotation and/or a lever operation. According to a preferable embodiment, the supporting surface has a curvature which is curved in opposite direction with respect to the curvature of a wheel to be supported and preferably at least partially comprises a shape of an outer surface of a solid of revolution.

According to a further preferable embodiment, the wheel holder further comprises a strap lock mechanism comprising a strap, preferably a toothed strap, and a buckle, preferably a pump buckle, adapted to receive a free end of the strap so as to form a fixation loop for the wheel of the bike, wherein at least the buckle is arranged so as to be rotatable about an axis A about which the operating portion is rotatable, and wherein preferably the buckle remains rotatable when the wheel holder is locked on the bike carrier. Preferably, the buckle and the strap remain rotatable when the wheel holder is locked on the bike carrier.

A bike carrier combining at least one of the features described in connection with the invention with at least one of the features described in connection with the first further example and/or at least one feature of the second further example is also disclosed and leads to a modification of the above described bike carriers, which combines the respectively achieved beneficial effects. Furthermore, a vehicle comprising a trunk and a bike carrier according to the above described invention, further examples and modifications is disclosed as well, wherein the bike carrier is mounted on a supporting surface of the trunk.

### BRIEF DESCRIPTION OF THE DRAWINGS

Fig. 1 shows a perspective view of a bike carrier according to an embodiment of the present disclosure, wherein the bike carrier is shown in a retracted condition.
Fig. 2 shows a perspective view of the bike carrier of Fig. 1 in an extended condition.
Fig. 3 shows a sectional side view of the bike carrier of Fig. 1 in the retracted condition.
Fig. 4 shows an enlarged section of Fig. 3.
Fig. 5 shows a perspective and longitudinal sectional is view of components of a locking mechanism.
Fig. 6 shows a cross-sectional view of the bike carrier of Fig. 1.
Fig. 7 shows a longitudinal sectional view of components of the locking mechanism.
Fig. 8 shows a perspective view of components of a base portion according to an embodiment.
Fig. 9 shows a side view of a modification of the bike carrier.

### DETAILED DESCRIPTION OF EMBODIMENTS

In the following, an embodiment as well as modifications of the present subject-matter will be described with reference to the drawings. It is to be noted that similar elements in the drawings are denoted with the same reference signs.

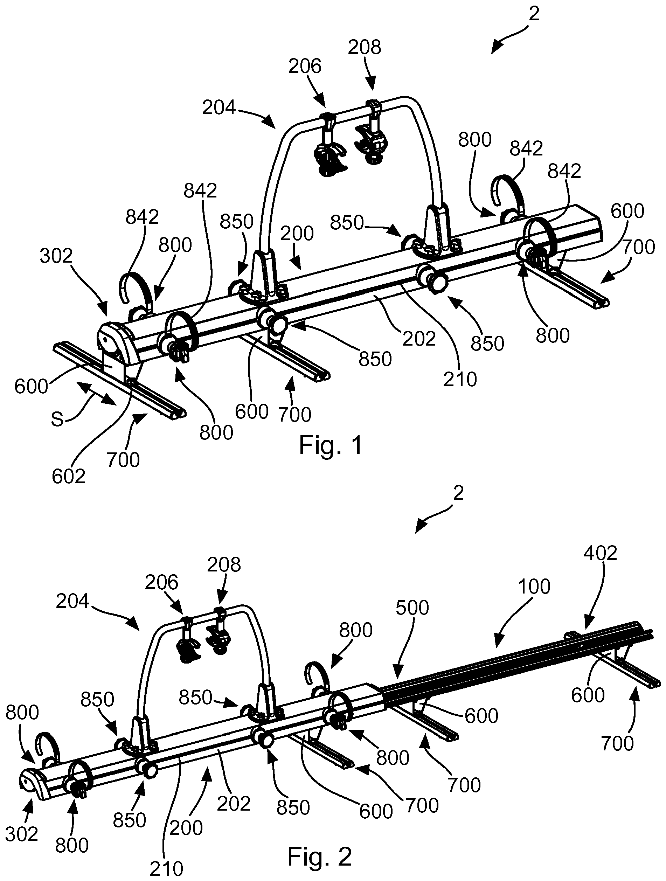

Figure 1 shows a perspective view of a bike carrier 2 according to an embodiment in a retracted condition and Fig. 2 shows a perspective view of the bike carrier 2 in an extended condition.

The bike carrier 2 comprises a base portion 100 which is mounted on guide rails 700 by means of coupling portions 600. More precisely, the coupling portions 600 have an upper portion which is fixedly coupled to the base portion 100 and a lower portion which is releasably locked to the guide rails 700 by means of a suitable fixation element 602. In case the fixation element 602 is tightened, the respective coupling portion 600 is fixedly connected to the guide rail 700. In case the fixation element 602 is loosened, the coupling portion 600 can be shifted or translatory moved along the respective guide rail 700 in both directions as is indicated by double arrow S in Fig. 1. Accordingly, the base portion 100 can be shifted along the guide rails 700. In the embodiment, the guide rail 700 are arranged substantially perpendicular to the longitudinal extension direction of the base portion 100. Accordingly, the bike carrier 2 can be shifted in lateral directions when the coupling portions 600 are unlocked from the guide rails 700. When using such an arrangement in a vehicle, it is for example possible to provide the guide rails 700 in the loading area of the vehicle such that one end of the same is located adjacent a loading area limiting wall. In this way, it is possible to move the bike carrier 2 close to the loading area limiting wall when it is not in use so that more room for storing other items is available in the loading area. Accordingly, the base portion 100 is adapted to be coupled to the vehicle such that it is arranged movable on the vehicle in a direction which is substantially perpendicular to the extension direction of the base portion. According to a modification, the coupling portion 600 can be completely removable from the guide rail 700. For example, the arrangement can be such that as soon as the fixation element 602 is completely unlocked, the whole bike carrier 2 can be removed from the vehicle. It is further to be noted that in a preferable application, the guide rails can be preferably arranged such that they extend in the longitudinal direction of the vehicle, for instance when using the bike carrier 2 in a loading area of a recreational vehicle. On the other hand, it is also possible to arrange the guide rails such that they extend in cross direction of the vehicle, for instance when using the bike carrier 2 on a truck bed of a pickup truck.

As is further shown in Fig. 1 and Fig. 2 the bike carrier 2 comprises a supporting portion 200 which in the present embodiment comprises a supporting rail 202. The supporting portion 200 is adapted to support two bikes, one on each lateral side of the supporting portion 200. In order to suitably support the bikes on the bike carrier 2, wheel holders 800, 850 are provided on the lateral sides of the supporting rail 202. The wheel holders 800, 850 are fixed to the supporting rail 202 by means of fixation grooves 210 of which one is provided on each lateral side of the supporting rail 202. According to the construction of the present embodiment, the wheel holders 800, 850 are releasably lockable in the fixation grooves 210 and can, thus, be freely positioned along the fixation grooves 210 as needed. The wheel of a bike (not shown) is, according to the embodiment, supported by a combination of one wheel holder 801 and one wheel holder 850. The main difference between the latter wheel holders 800, 850 is that the wheel holder 800 comprises a strap lock mechanism with a strap 842, a toothed strap in the embodiment, and a pump buckle which is adapted to receive a free end of the strap 842 so as to form a fixation loop for a wheel of a bike. The wheel holders will be described in greater detail below. However, it is already know mentioned that one of the core features of the wheel holders is that it is possible to releasably lock and to unlock them tool-free. In other words, a user does not need any tools to position and fix the wheel holders at a desired position.

The bike carrier 2 further comprises a frame 204 which is arranged on an upper surface of the supporting rail 202 and in a mounted condition of the bike carrier 2 extends substantially vertically upwards from the upper surface of the supporting rail 202. The frame 204 is U-shaped with the free ends being coupled to the supporting rail 202. The frame 204 serves the purpose to provide further fix points for supporting the bike on the bike carrier 2, more precisely the frame of the bikes to be transported. In the embodiment, two bike arms 206, 208 are arranged on the frame 204 and are configured to couple the frame portion of the bike to the frame 204.

As is further indicated in Fig.1 and Fig. 2, the bike carrier 2 comprises one operating member 302 for operating a locking mechanism which will be described below in detail. Generally, the locking mechanism is configured to releasably lock a movement of the supporting rail 202 with respect to the base portion 100. The operating member 302 is provided to release the locking when operated. When the locking mechanism is in the release condition, a movement of the supporting rail 202 with respect to the base portion 100 is allowed in the longitudinal direction of the base portion 100. Thus, by operating the operating member 302, it is possible to unlock the supporting rail 202 from the base portion 100 and to move the supporting rail 202 and all of the components fixed thereto translatory along the base portion 100 from the retracted position as is shown in Fig. 1 to an extended position as is shown in Fig. 2. The bike carrier 2 according to the embodiment is preferably mounted on the loading area of the vehicle such that the supporting rail 202 extends out of the loading area of the vehicle so that loading and unloading bikes on the bike carrier 2 is easier possible. In the embodiment, the locking mechanism cooperates with several stop members, two of them 402, 500 being shown in Fig. 2.

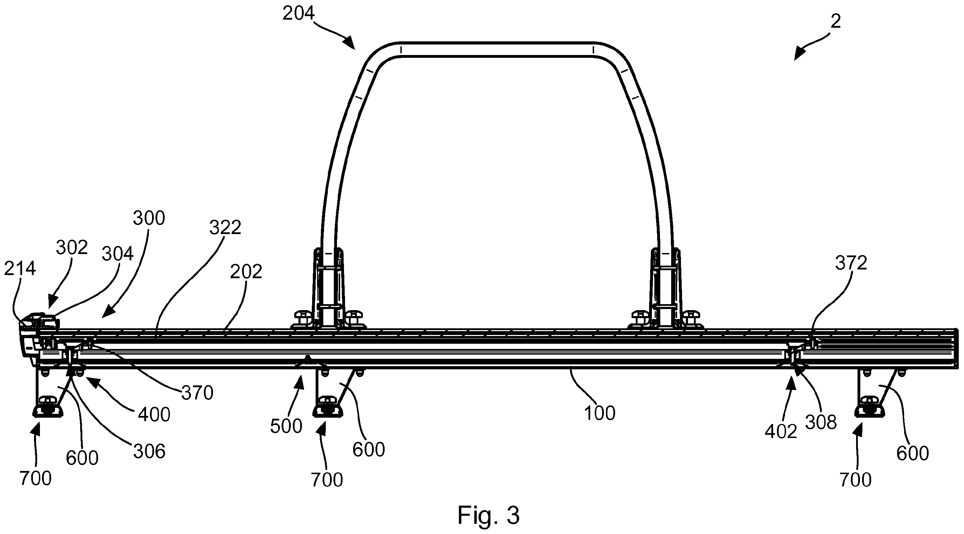

With reference to Fig. 3, the construction of the locking mechanism 300 according to the embodiment will be further described. Fig. 3 shows a sectional view of the bike carrier 2 along the longitudinal direction of the bike carrier 2. A further stop member 400 of the above mentioned stop members is shown in Fig. 3. The locking mechanism 300 according to the embodiment comprises two engaging members 306, 308 which are configured to establish a form fit connection with the base portion 100. More precisely, the engaging members 306, 308 are configured to engage with the stop members 400, 402 and 500. All stop members are fixedly coupled to the base portion 100. It is to be noted that the stop member 500 will also be referred to as intermediate stop member 500 and that this intermediate stop member 500 is optional.

As was already described above, the locking mechanism 300 allows to release a locking of the two engaging members 306, 308 by actuating the operating member 302. In the present embodiment, the operating member 302 is an operating handle. The operating handle comprises a casing portion 214 which is fixedly coupled to the supporting rail 202, more precisely to a longitudinal end of the supporting rail 202. An operating element 304 which is also referred to as operating handle or operating button is arranged movable with respect to the casing portion 214. The casing portion 214 and the operating element 304 are configured and have a dimension which allows a user to place the wrist of his hand on the casing portion 214 and to place the fingertips on the operating element 304. Thus, the operating member 302 can be operated in and squeezing like manner in which the user moves the operating element 304 towards the casing portion 214 using his fingertips.

The operating element 304 is fixedly coupled to a lock bar 322 which extends over a substantial portion of the bike carrier 2 in the longitudinal direction, more precisely slidably movable within the supporting rail 202. Thus, pushing the operating member 302 will lead to a movement of the lock bar 322. In the arrangement according to the embodiment, the lock bar 322 is moved towards the longitudinal end of the supporting rail 202 where the operating member 302 is arranged. The lock bar 322 is a specific kind of the force transmitting member which can be used for transmitting force from the operating member 302 to the engaging members 306, 308. Instead of the lock bar 322, another force transmitting member may be used for applying a force onto the engaging members 306, 308, a wire or cable for instance. Furthermore, the lock bar is not limited to a specific shape.

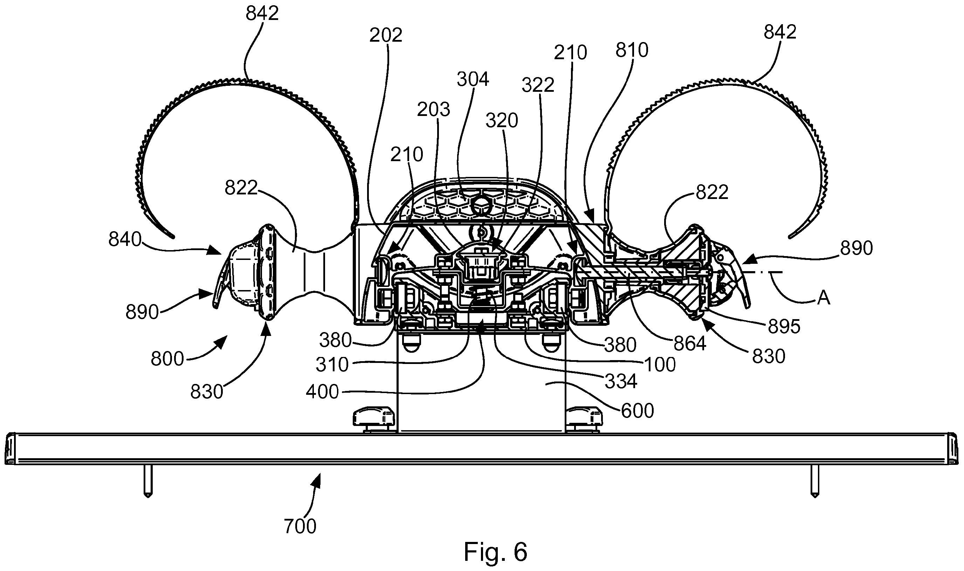

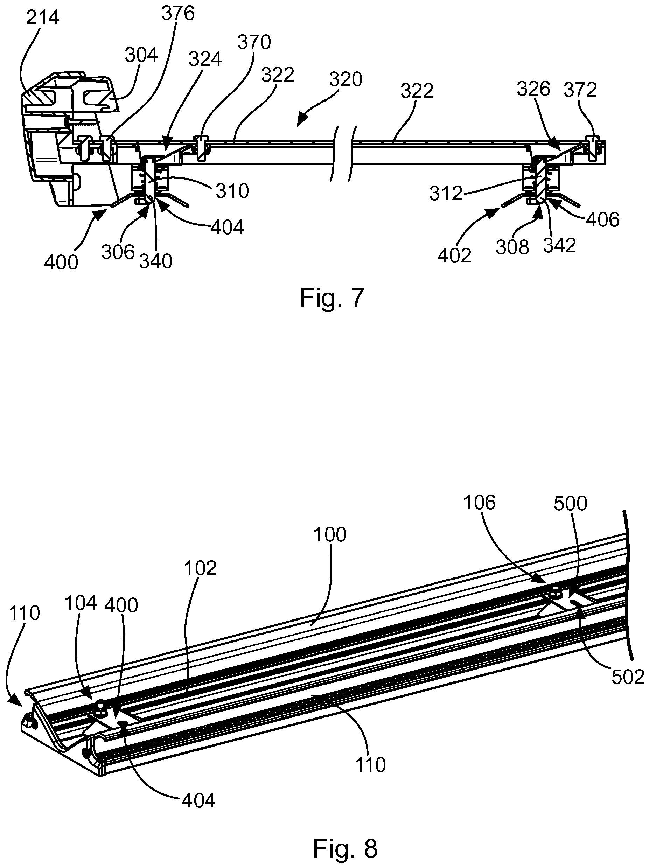

The lock bar 322 is force transmittingly coupled to the engaging members 306, 308 by means of coupling sections 324, 326 which will be further described below. The coupling sections according to the embodiment are separate elements which are fixedly coupled to the lock bar 322 by means of suitable fixation elements like screws 370, 372. However, it is to be noted that the coupling sections may be an integral part of the lock bar 322. Fig. 6 shows a cross sectional view of the bike carrier 2 in which it is inter alia shown that the lock bar 322 is slidably supported on protrusions formed on a lower or interior structure 203 of the supporting rail 202. Furthermore, it is shown that the supporting portion 200 is supported on the base portion 100 by means of rollers 380 which run in grooves 110 provided on the lateral sides of the base portion 100 as can be seen in Fig. 8.

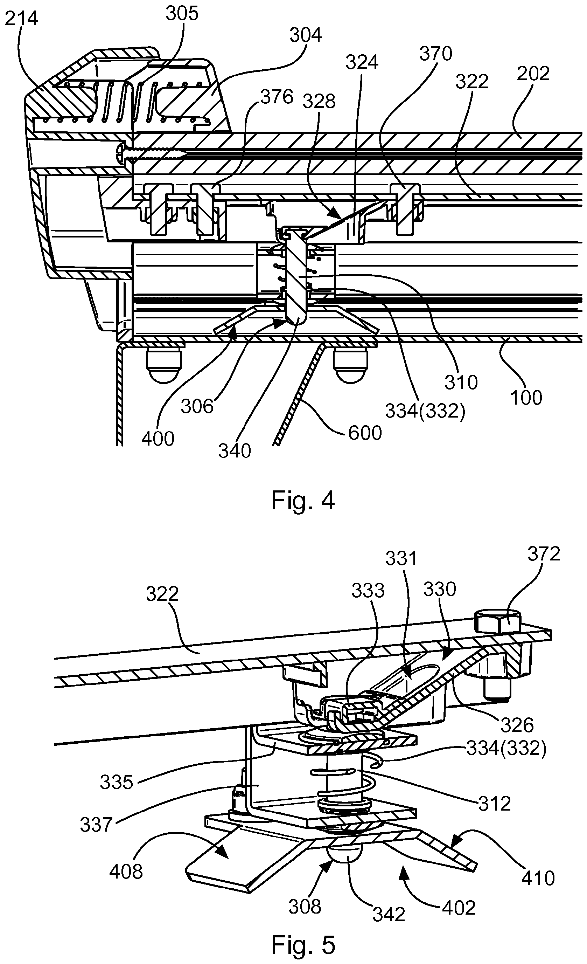

Further details of the locking mechanism will be described with reference to Figs. 4 to 7, which show enlarged sections of the bike carrier 2 of Fig. 3. As is shown in Fig. 4, a spring 305 is arranged between the casing portion 214 and the operating element 304 and pretensions the operating element 304 towards the right side. Furthermore, Fig. 4 shows that the operating element 304 is fixedly connected to the lock bar 322 by means of two screws 376.

A first coupling section 324 having an inclined surface 328 is also shown in Fig. 4. The inclined surface 328 is arranged such that an upper portion of the engaging member 306 rides on the inclined surface 328 when the lock bar 322 is moved. The inclined surface 328 is inclined such that a movement of the lock bar 322 towards the left side in Fig. 4 pushes the upper portion of the engaging member 306 upwards. In other words, the construction is such that the first coupling section 324 acts as a wedge which is moved or shifted under the upper portion of the engaging member 306 thereby urging the upper portion and consequently the engaging member 306 in the upward direction.

As is further shown in Fig. 4, the engaging member 306 is embodied as lock pin 310. The lock pin 310 is slidably translatory movably held on the supporting rail 202 so as to be able to move up and down. An elastic member 332 in the form of a spring 334 is arranged around the lock pin 310 and pretensions the lock pin 310 in the downward direction. In other words, lifting the lock pin 310 upwards takes place against the force of the spring 334. Thus, according to the embodiment, moving the lock bar 322 towards the right side in Fig. 4, for example due to the force exerted by the spring 305, leads to a lowering of the lock pin 310. The lock pin 310 comprises an engaging portion 340 which is adapted to engage with a recess provided in the stop members. In the retracted position as is shown in Fig. 3 locking pin 310 is engaged with stop member 400. For that purpose, stop member 400 comprises an opening 404 having a diameter substantially corresponding to the outer diameter of the lock pin 310. As is shown in Fig. 8, the stop member 400 is fixed on the base portion by means of a screw 104 in a fixation groove 102 extending in the longitudinal direction of the base portion 100.

A second coupling section 326 is shown in Fig. 5 and Fig. 7 and is adapted to couple the lock bar 322 with the engaging member 308 which is also embodied as a lock pin 312. The construction of the first coupling section 324 and the second coupling section 326 is identical. Like the first coupling section 324, the second coupling section 326 comprises an inclined surface 330 which is provided in the same manner as the inclined surface 328 of the first coupling section 324. The lock pin the 312 is again pretensioned by means of an elastic member 332 in the form of the spring 334 in the same manner as already described above. Again, the engaging member 308 comprises an engaging portion 342 which is adapted to engage with a stop member. The lock pin 312 is also slidably translatory movably held on the supporting rail 202 so as to be able to move up and down in exact the same manner as the lock pin 310. However, in Fig. 5 it is shown how the lock pins 310, 312 are held on the supporting rail 202. Two flanges 335, 336 each having an opening for movably accommodating the lock pins 335, 336 are arranged at a distance with respect to each other and coupled to the supporting rail 202. In a space between the flanges, the spring 334 is arranged and supported against a lower surface of the upper flange 335 at one end and supported against a the pin at the other end. Thus, a movement of the pins in the upward direction will compress the spring 334. Also, it is shown that the coupling sections 324, 326 comprise openings 331 in which the lock pins are guided. In other words, the coupling sections 324, 326 have a fork-like shape in which the fork prongs pass the lock pins on opposite sides. The upper portion of the lock pins may be held in a guiding element 333 which is specifically designed to ride on the inclined surface 330.

The stop member 402 has a similar shape to the stop member 400 but differs from the intermediate stop member 500. Each stop member 400, 402 defines a locking position of the supporting portion 200 with respect to the base portion. Each locking member 400, 402 comprises a receiving portion 404, 406 for receiving the engaging members 306, 308. According to the embodiment, each receiving portion 404, 406 comprises an opening. All stop members are arranged on the base portion 100 adjustably movable with respect to the base portion such that a stop position of the supporting portion with respect to the base portion 100 can be changed. Since each engaging member is pretensioned towards a locking position in which an engagement with a stop member can be established, the engaging members are able to automatically establish a form fit connection with the base portion. In order to facilitate an automatic engagement, the stop members comprise inclined surfaces 408, 410 on both sides of the receiving portions 404, 406, which are provided for urging the engaging portions 340, 342 upward towards the receiving portions when the supporting portion 200 is moved along the base portion 100. In other words, the engaging portions 340, 342 can snap into the receiving portions 404, 406 without the need to actuate the locking mechanism.

The intermediate stop member 500 differs from the other stop members only in that the receiving portion 502 does not comprise a recess which allows a full engagement of the engaging portions. The recess only allows to accommodate the engaging portions therein to an extent that an application of a force on the supporting portion 200 in a longitudinal direction of the same releases the engaging portion from the receiving portion 502. In other words, the engaging portion can ride over the edge of the receiving portion 502 when a sufficiently high force is applied on the supporting portion 200.

In the above configuration of the bike carrier 2 according to the embodiment, two stop members 400, 402 are arranged on the base portion 100 at a distance at which the engaging members 306 and 308 are provided on the supporting portion 200. Furthermore, the stop members 400, 402 and the engaging members 306, 308 are arranged such that the engaging members are engaged when the supporting portion 200 is in the retracted position. Thus, in the retracted position both engaging members 306, 308 are engaged with stop members 400, 402 which provides an enhanced safety of the bike carrier against undesired movement of the supporting portion 200. In the extended position, only engaging member 308 is in engagement with stop member 400 which is enough for locking the supporting portion 200 in place for loading purposes. The position in which the engaging member 308 is temporarily held on the intermediate stop member can be referred to as partially extended position. It is furthermore to be noted that, although not shown in the drawings, a further position may be realized in which the supporting portion 200 is moved such that engaging member 306 comes into engagement with the intermediate stop member 500.

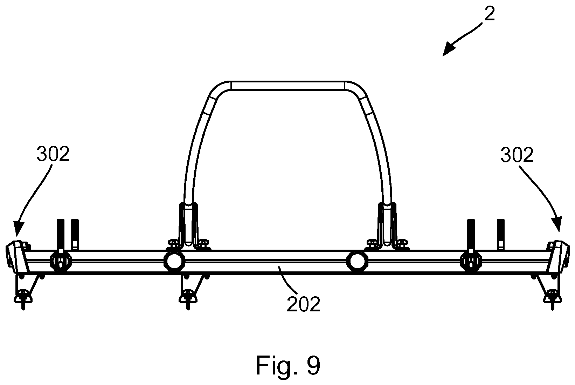

With the above configuration of the locking mechanism 300, it is possible to release a locking of the supporting portion 200 with respect to the base portion 100 by operating a single operating member 302. Although only one operating member is described above, it is also possible to provide two or more operating members of which each single one can be used for releasing the locking. In other words, according to a modification, a further operating member which is coupled to the lock bar 322 can be provided at another position. Furthermore, it is even possible to provide an operating member on the opposite longitudinal end of the supporting rail 202 as is shown in Fig. 9 and to couple such an operating member to the lock bar 322 by means of a mechanism transferring the movement of the operating element such that the desired movement of the lock bar 322 is achieved, by means of a lever mechanism for instance. It is also possible to provide a mechanism which is similar to the above mechanism with the difference that the coupling sections 324, 326 comprise a V-shape, i.e. two inclined surfaces meeting at the lowest portion. With such an arrangement, a movement of the lock bar in the opposite longitudinal direction would also move the lock pins 310, 312 upwards. Also, in the above described configuration the engaging members 306, 308 are moved substantially perpendicular to the longitudinal direction of the base portion and in the upward direction.

As already mentioned above, the bike carrier 2 comprises wheel holders 800, 850 for supporting wheels of a bike. As is shown in Fig. 6, each wheel holder 800 comprises a mounting portion 810 by means of which the wheel holder 800 is mounted releasably lockable and slidably movable in the groove 210. The mounting portion 810 comprises a locking mechanism for releasably locking the wheel holder on the bike carrier. Furthermore, each wheel holder comprises a supporting portion 820 with a supporting surface 822 which is adapted to support a wheel of a bike. In the present embodiment, the supporting surface has a curvature in the longitudinal direction of the bike carrier 2 which is curved in opposite direction with respect to the curvature of a wheel to be supported and has a shape of an outer surface of a solid of revolution which is similar to the shape of two identical truncated cones which are joined at their smaller diameter portions.

Each wheel holder 800, 850 further comprises a rotatable operating portion 830 for tool-free operating the locking mechanism, wherein the operating portion 830 is freely rotatable with respect to the supporting portion 820. The operating portion 830 is specifically designed to be gripped by a user, i.e. is designed for hand operation. In addition to the latter features, the wheel holder 800 comprises a strap lock mechanism 840 having a toothed strap 842 and a pump buckle 890 adapted to receive a free end of the strap 842 so as to form a fixation loop for a wheel of a bike to be transported on the bike carrier 2. According to the embodiment, the buckle 890 and the strap 842 are arranged so as to be rotatable about an axis A about which the operating portion 830 is rotatable. The buckle 890 and the strap 842 remain rotatable when the wheel holder 800 is locked on the bike carrier 2. This is due to the advantageous construction of the wheel holders according to which a threaded bolt 864 is non-rotatably inserted in the groove 210 at one end and the operating portion 830 is threaded on the other end of the bolt 864 while the supporting surface 822 is interposed between the mounting portion 810 and the operating portion 830. Thus, when tightening the operating member 830, the supporting surface 822 is pushed against the mounting portion 810. In this way, the wheel holder is locked in position on the supporting portion 200. However, since a space is provided for the strap 810 and a base plate 895 carrying the buckle 890 are mounted on the bolt 864 independent from the operating member 830, the base plate 895 and, thus, the buckle remains rotatable even if the operating portion 830 is tightened.

## Claims

1. Bike carrier (2) comprising:
a base portion (100) mountable on a vehicle, e.g. on the floor of a loading area such as a garage or trunk in a recreational vehicle or a truck bed of a pickup truck;
a supporting portion (200), preferably a supporting rail (202), adapted to support at least one bike, wherein said supporting portion (200) is translatory movably arranged on said base portion (100) so as to be movable at least between an extended position in which the supporting portion (200) is offset with respect to said base portion (100) and a retracted position; and
a locking mechanism (300) adapted to releasably lock said supporting portion (200) in said extended position and said retracted position;
wherein said locking mechanism (300) comprises at least one operating member (302) arranged on the supporting portion (200), preferably two operating members (302) arranged on opposite longitudinal sides of the supporting portion (200), preferably an operating handle (304) or operating button, and is configured such that a locking in said extended position and said retracted position can be released by each single one of said at least one operating member (302).

2. Bike carrier (2) according to claim 1, wherein said locking mechanism (300) comprises at least one engaging member (306), preferably two engaging members (306, 308), configured to establish a form fit connection with said base portion (100), wherein said engaging member (306, 308) is preferably a lock pin (310, 312).

3. Bike carrier (2) according to claim 2, wherein said locking mechanism (300) comprises a force transmitting member (320), preferably a lock bar (322), which can be slidably arranged on said supporting portion (200) and/or can be directly coupled to said at least one operating member (302), for force transmittingly coupling said at least one operating member (302) with each engaging member (306, 308).

4. Bike carrier (2) according to one of claims 2 and 3, wherein said force transmitting member (320) comprises a coupling section (324, 326) for force transmittingly coupling said force transmitting member (320) such that said engaging member (306, 308) is moved into an unlocking position with respect to said base portion (100) upon movement of said force transmitting member (302).

5. Bike carrier (2) according to claim 4, wherein at least said coupling section (324, 326) comprises an inclined sliding surface (328, 330) which is in contact with said engaging member (306, 308) such that a movement of said force transmitting member (320) leads to a movement of said engaging member (306, 308), preferably to a movement substantially perpendicular to a longitudinal direction of said base portion (100).

6. Bike carrier (2) according to one of claims 2 to 4, wherein said locking mechanism (300) comprises a stop member (400, 402) for defining a locking position of said supporting portion (200) with respect to said base portion (100), said stop member (400, 402) preferably comprising a receiving portion (404, 406) for receiving said engaging member (306, 308) and being most preferably arranged on said base portion (100) adjustably movable with respect to the base portion (100) such that a stop position of said supporting portion (200) with respect to said base portion (100) can be changed.

7. Bike carrier (2) according to one of claims 2 to 6, wherein said at least one engaging member (306, 308) is pretensioned towards a locking position by means of an elastic member (332) such as a spring (334), and configured to automatically establish said form fit connection with said base portion (100).

8. Bike carrier (2) according to one of claims 2 to 7, wherein said locking mechanism (300) further comprises an intermediate stop member (500) comprising a recess (502) and said engaging member (306, 308) comprises an engaging portion (340, 342), wherein said recess (502) and said engaging portion (340) are configured such that a form fit engagement between them can be released by a predetermined force applied on said supporting portion (200) for translatory moving the same.

9. Vehicle comprising,
a trunk, and
a bike carrier (2) according to one of claims 1 to 8, said bike carrier (2) being mounted on a supporting surface of the trunk.

## Patentansprüche

1. Fahrradträger (2), umfassend:
einen Basisabschnitt (100), der an einem Fahrzeug montierbar ist, z. B. auf dem Boden einer Ladefläche wie einer Garage oder eines Kofferraums in einem Reisemobil oder einer Ladefläche eines Kleintransporters;
einen Stützabschnitt (200), vorzugsweise eine Stützschiene (202), die angepasst ist, um mindestens ein Fahrrad zu stützen, wobei der Stützabschnitt (200) verschiebbar beweglich auf dem Basisabschnitt (100) angeordnet ist, um zumindest zwischen einer ausgefahrenen Position, in der der Stützabschnitt (200) in Bezug auf den Basisabschnitt (100) versetzt ist, und einer eingefahrenen Position beweglich zu sein; und
einen Verriegelungsmechanismus (300), der angepasst ist, um den Stützabschnitt (200) in der ausgefahrenen Position und der eingefahrenen Position lösbar zu verriegeln;
wobei der Verriegelungsmechanismus (300) mindestens ein Betätigungselement (302) umfasst, das an dem Stützabschnitt (200) angeordnet ist, vorzugsweise zwei Betätigungselemente (302), die an gegenüberliegenden Längsseiten des Stützabschnitts (200) angeordnet sind, vorzugsweise einen Betätigungsgriff (304) oder -knopf, und so konfiguriert ist, dass eine Verriegelung in der ausgefahrenen Position und der eingefahrenen Position durch jedes einzelne des mindestens einen Betätigungselements (302) gelöst werden kann.

2. Fahrradträger (2) nach Anspruch 1, wobei der Verriegelungsmechanismus (300) mindestens ein Eingriffselement (306) umfasst, vorzugsweise zwei Eingriffselemente (306, 308), die konfiguriert sind, um eine formschlüssige Verbindung mit dem Basisabschnitt (100) herzustellen, wobei das Eingriffselement (306, 308) vorzugsweise ein Verriegelungsstift (310, 312) ist.

3. Fahrradträger (2) nach Anspruch 2, wobei der Verriegelungsmechanismus (300) ein Kraftübertragungselement (320) umfasst, vorzugsweise einen Verriegelungsstab (322), der verschiebbar an dem Stützabschnitt (200) angeordnet sein kann und/oder direkt mit dem mindestens einen Betätigungselement (302) gekoppelt sein kann, um das mindestens eine Betätigungselement (302) mit jedem Eingriffselement (306, 308) kraftübertragend zu koppeln.

4. Fahrradträger (2) nach einem der Ansprüche 2 und 3, wobei das Kraftübertragungselement (320) einen Kopplungsabschnitt (324, 326) zum kraftübertragenden Koppeln des Kraftübertragungselements (320) umfasst, so dass das Eingriffselement (306, 308) bei Bewegung des Kraftübertragungselements (302) in eine Entriegelungsposition in Bezug auf den Basisabschnitt (100) bewegt wird.

5. Fahrradträger (2) nach Anspruch 4, wobei mindestens der Kopplungsabschnitt (324, 326) eine geneigte Schiebefläche (328, 330) umfasst, die mit dem Eingriffselement (306, 308) in Kontakt ist, so dass eine Bewegung des Kraftübertragungselements (320) zu einer Bewegung des Eingriffselements (306, 308) führt, vorzugsweise zu einer Bewegung im Wesentlichen senkrecht zu einer Längsrichtung des Basisabschnitts (100).

6. Fahrradträger (2) nach einem der Ansprüche 2 bis 4, wobei der Verriegelungsmechanismus (300) ein Anschlagelement (400, 402) zum Definieren einer Verriegelungsposition des Stützabschnitts (200) in Bezug auf den Basisabschnitt (100) umfasst, wobei das Anschlagelement (400, 402) vorzugsweise einen Aufnahmeabschnitt (404, 406) zum Aufnehmen des Eingriffselements (306, 308) umfasst und am meisten bevorzugt in Bezug auf den Basisabschnitt (100) verstellbar beweglich an dem Basisabschnitt (100) angeordnet ist, so dass eine Anschlagposition des Stützabschnitts (200) in Bezug auf den Basisabschnitt (100) verändert werden kann.

7. Fahrradträger (2) nach einem der Ansprüche 2 bis 6, wobei das mindestens eine Eingriffselement (306, 308) mittels eines elastischen Elements (332) wie einer Feder (334) in Richtung einer Verriegelungsposition vorgespannt ist und konfiguriert ist, um die formschlüssige Verbindung mit dem Basisabschnitt (100) automatisch herzustellen.

8. Fahrradträger (2) nach einem der Ansprüche 2 bis 7, wobei der Verriegelungsmechanismus (300) ferner ein Zwischenanschlagelement (500) mit einer Aussparung (502) umfasst und das Eingriffselement (306, 308) einen Eingriffsabschnitt (340, 342) umfasst, wobei die Aussparung (502) und der Eingriffsabschnitt (340) so konfiguriert sind, dass ein formschlüssiger Eingriff zwischen ihnen durch eine auf den Stützabschnitt (200) ausgeübte vorbestimmte Kraft gelöst werden kann, um diesen verschiebbar zu bewegen.

9. Fahrzeug, umfassend:
einen Kofferraum, und
einen Fahrradträger (2) nach einem der Ansprüche 1 bis 8, wobei der Fahrradträger (2) auf einer Stützfläche des Kofferraums montiert ist.

## Revendications

1. Porte-vélos (2) comprenant :
une partie de base (100) pouvant être montée sur un véhicule, par exemple sur le sol d'une zone de chargement telle qu'un garage ou un coffre d'un véhicule de loisir ou telle qu'une plateforme d'une camionnette à plateau ;
une partie support (200), de préférence un rail support (202), conçue pour supporter au moins un vélo, ladite partie support (200) étant mobile en translation sur ladite partie de base (100) de manière à pouvoir se déplacer au moins entre une position déployée dans laquelle la partie support (200) est décalée par rapport à la partie de base (100) et une position rétractée ; et
un mécanisme de verrouillage (300) conçu pour verrouiller de manière réversible ladite partie support (200) dans ladite position déployée et ladite position rétractée ;
dans lequel ledit mécanisme de verrouillage (300) comprend au moins un élément d'actionnement (302) disposé sur la partie support (200), de préférence deux éléments d'actionnement (302) disposés sur des côtés longitudinaux opposés de la partie support (200), de préférence une poignée d'actionnement (304) ou un bouton d'actionnement, et est conçu de manière qu'un verrouillage dans ladite position déployée ou ladite position rétractée peut être déverrouillé par chacun du au moins un élément d'actionnement (302).

2. Porte-vélos (2) selon la revendication 1, dans lequel ledit mécanisme de verrouillage (300) comprend au moins un élément entrant en prise (306), de préférence deux éléments entrant en prise (306, 308), destiné à établir une liaison par complémentarité de formes avec ladite partie de base (100), ledit élément entrant en prise (306, 308) étant de préférence une cheville de blocage (310, 312).

3. Porte-vélos (2) selon la revendication 2, dans lequel ledit mécanisme de verrouillage (300) comprend un élément de transmission de force (320), de préférence une barre de blocage (322), qui peut être disposé de manière coulissante sur ladite partie support (200) et/ou qui peut être couplé directement audit au moins un élément d'actionnement (302), afin de coupler ledit au moins un élément d'actionnement (302) avec chaque élément entrant en prise (306, 308) de manière à transmettre la force.

4. Porte-vélos (2) selon l'une des revendications 2 et 3, dans lequel ledit élément de transmission de force (320) comprend un segment de couplage (324, 326) afin de coupler ledit élément de transmission de force (320) de manière à transmettre la force, de sorte que ledit élément entrant en prise (306, 308) est déplacé vers une position de déverrouillage par rapport à ladite partie de base (100) lors d'un mouvement dudit élément de transmission de force (320).

5. Porte-vélos (2) selon la revendication 4, dans lequel au moins ledit segment de couplage (324, 326) comprend une surface inclinée de glissement (328, 330) en contact avec ledit élément entrant en prise (306, 308) de sorte qu'un mouvement dudit élément de transmission de force (320) provoque un mouvement dudit élément entrant en prise (306, 308), de préférence un mouvement essentiellement perpendiculaire à une direction longitudinale de ladite partie de base (100).

6. Porte-vélos (2) selon l'une des revendications 2 à 4, dans lequel ledit mécanisme de verrouillage (300) comprend un élément d'arrêt (400, 402) destiné à définir une position de verrouillage de ladite partie support (200) par rapport à ladite partie de base (100), ledit élément d'arrêt (400, 402) comprenant de préférence une partie réceptrice (404, 406) destinée à recevoir ledit élément entrant en prise (306, 308) et étant de plus grande préférence disposé sur ladite partie de base (100) de manière à pouvoir se déplacer pour réglage par rapport à la partie de base (100), de sorte qu'il est possible de modifier une position d'arrêt de ladite partie support (200) par rapport à ladite partie de base (100).

7. Porte-vélos (2) selon l'une des revendications 2 à 6, dans lequel ledit au moins un élément entrant en prise (306, 308) est en prétension vers une position de verrouillage au moyen d'un élément élastique (332) tel qu'un ressort (334), et conçu de manière à établir automatiquement ladite liaison par complémentarité de formes avec ladite partie de base (100).

8. Porte-vélos (2) selon l'une des revendications 2 à 7, dans lequel ledit mécanisme de verrouillage (300) comprend en outre un élément d'arrêt intermédiaire (500) comprenant un renfoncement (502) et ledit élément entrant en prise (306, 308) comprend une partie entrant en prise (340, 342), ledit renfoncement (502) et ladite partie entrant en prise (340) étant conçus de manière qu'une force prédéterminée appliquée sur ladite partie support (200) pour la déplacer en translation peut défaire une liaison par complémentarité de formes entre eux.

9. Véhicule comprenant
un coffre, et
un porte-vélos (2) selon l'une des revendications 1 à 8, ledit porte-vélos (2) étant monté sur une surface porteuse du coffre.
